# EUROPEAN PATENT APPLICATION

(11) **EP 4 749 013 A1**
(43) Date of publication of application: **27.05.2026**
(21) Application number: 25165499.2
(22) Date of filing: 23.03.2025
(51) Int. Cl.: D06M 13/165, C08L 83/06, D06M 13/17, D06M 13/188, D06M 13/256, D06M 13/262, D06M 13/463, D06M 15/65, D06M 101/40, D06M 15/643, D06M 13/192, D06M 101/28, D06M 13/473

(54) **TREATMENT AGENT COMPOSITION FOR CARBON FIBER, TREATMENT AGENT FOR CARBON FIBER, METHOD OF FORMING THE SAME AND CARBON FIBER PRECURSOR**

(30) Priority: 20.11.2024 TW 113144626
(71) Applicant: Formosa Plastics Corporation, Kaohsiung City (TW)
(72) Inventor: TSAI, Kun-Yeh, Kaohsiung City (TW); HUNG, Chia-Chi, Kaohsiung City (TW); CHOU, Wen-Ju, Kaohsiung City (TW); LIN, Shi-Jie, Kaohsiung City (TW); HWANG, Long-Tyan, Kaohsiung City (TW); WU, Chien-Hsin, Taipei City (TW); HUANG, Ying-Chi, Taipei City (TW); LIN, Gong-De, Kaohsiung City (TW); TUNG, Shih-Huang, Taipei City (TW); JENG, Ru-Jong, Taipei City (TW)
(74) Representative: Lang, Christian

(57) **Abstract**

A treatment agent composition for carbon fiber, a treatment agent for carbon fiber, a method of forming the same and a carbon fiber precursor are provided. The treatment agent composition for carbon fiber includes modified polysiloxane having at least one modified functional group, a dispersing agent and water. Based on an amount of the modified polysiloxane as 100 wt%, an amount of the dispersing agent is 10 wt% to 50 wt%. The dispersing agent has a structure shown as formula (I). The modified polysiloxane is dispersed in water by the dispersing agent with the specific structure, thereby making the treatment agent for carbon fiber have better emulsification stability and thermal stability.

## Description

### BACKGROUND

### Field of Invention

The present invention relates to a treatment agent composition for carbon fiber. More particularly, the present invention relates to the treatment agent composition for carbon fiber, a treatment agent for carbon fiber, a method of forming the same and a carbon fiber precursor.

### Description of Related Art

Carbon fiber is fibrous carbon material, which includes carbon atoms more than 90%, and the carbon atoms arranges along an axial direction of fiber continuously. Thus, the carbon fiber usually has great mechanical properties. Properties of the carbon fiber is light mass and high strength, for example, the specific gravity of the carbon fiber is about 1/4 time that of iron, the tensile strength is about 10 times that of iron and the tensile modulus is about 7 times that of iron. Since the carbon fiber has the aforementioned properties, it can replace metal to achieve lightweight requirement in application. Moreover, since the carbon fiber has properties such as great strength, great modulus, high temperature resistance, corrosion resistance, low expansion, size stability, and etc., it can also be used as reinforced material to form carbon fiber reinforced material with synthetic resin such as epoxy resin. Thus, it can be applied in technical field such as aviation, military industry and high technology. Demand for carbon fiber composite material is expected to continue to increase.

Fabrication of the carbon fiber is generally based on polyacrylonitrile (PAN)-based filament as a raw material for carbon fiber filament. In a fabricating process of the PAN-based filament, it is needed to perform processes of stretching, high-temperature, oxidation and carbonization. However, the carbon fiber filaments soften easily during high-temperature calcination, and the carbon fiber filaments are also prone to contact and friction with surfaces of rollers during transportation process, thereby causing hairiness and other defects, and reducing quality of the obtained carbon fibers.

In order to prevent the above defects, a treatment agent for carbon fiber is needed to use to modify friction property of the carbon fiber filament, thereby preventing and/or eliminating accumulation of static electricity and helping production of the carbon fiber filament. The treatment agent for carbon fiber can form film on a surface of the carbon fiber to prevent adhesion and friction between the carbon fiber filaments, thereby avoiding production of defects on the carbon fiber.

Conventional treatment agent for carbon fiber has a main component of amino polysiloxane, but the amino polysiloxane has greater viscosity, so it is needed to dissolve the amino polysiloxane in a solvent to cover on the carbon fiber filament. However, the amino polysiloxane has hydrophobicity, so the solvent should be an organic solvent, but the organic solvent usually has flammability and volatility, thereby existing safety problem and pollution problem.

Therefore, there is a need to provide a treatment agent composition for carbon fiber, a treatment agent for carbon fiber and a method of forming the same to solve safety problem and increase environmental friendliness, and still effectively applied in the fabricating process of the carbon fiber.

### SUMMARY

An aspect of the present invention provides a treatment agent composition for carbon fiber, which disperses a modified polysiloxane in water by using a dispersing agent, thereby not having to use an organic solvent.

Another aspect of the present invention provides a method of forming a treatment agent for carbon fiber, which dispersing the modified polysiloxane and the dispersing agent in water after mixing the modified polysiloxane and the dispersing agent.

Yet another aspect of the present invention provides a treatment agent for carbon fiber, which is formed by the method of the above aspect.

Yet another aspect of the present invention provides a carbon fiber precursor, which is covered by the treatment agent for carbon fiber of the above aspect.

According to the aspect of the present invention, providing the treatment agent composition for carbon fiber, which includes a modified polysiloxane having at least one modified functional group, a dispersing agent and water. Based on an amount of the modified polysiloxane as 100 wt%, an amount of the dispersing agent is 10 wt% to 50 wt%. The dispersing agent has a structure shown as following formula (I): 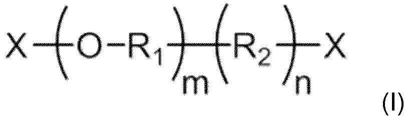 In the formula (I), R₁ represents linear, cyclic or branched aliphatic hydrocarbon, ether or cyclic ether having 2 to 10 carbon atoms; R₂ represents substituted or unsubstituted linear, cyclic or branched aliphatic hydrocarbon, cyclic ether, cyclic hydrocarbon or aromatic hydrocarbon having 2 to 30 carbon atoms; each X independently represents alkyl group, hydroxyl group, sulfonyl hydroxide group, carboxyl group and or salt thereof, primary amine, secondary amine, tertiary amine or salt thereof, quaternary ammonium salt, alkyl dimethyl ammonium salt, alkyl trimethyl ammonium salt, dialkyl dimethyl ammonium salt, ester quaternary ammonium salt or imidazolinium quaternary ammonium salt; m represents integer from 1 to 10; and n represents integer from 1 to 30.

According to an embodiment of the present invention, the treatment agent composition for carbon fiber further includes an auxiliary agent, which includes a pH modifier. Based on the amount of the modified polysiloxane as 100 wt%, an amount of the auxiliary agent is 1 wt% to 3 wt%.

According to an embodiment of the present invention, the pH value of the treatment agent composition for carbon fiber is 6 to 8.

According to an embodiment of the present invention, the modified polysiloxane has a viscosity in a range between 200 mm²/s and 10000 mm²/s.

According to an embodiment of the present invention, the dispersing agent includes a cationic surfactant, a nonionic surfactant or combinations thereof.

According to an embodiment of the present invention, the dispersing agent has a molecular weight in a range between 150 g/mol and 5000 g/mol.

According to an embodiment of the present invention, the dispersing agent has an HLB value in a range between 9.5 and 14.

According to an embodiment of the present invention, the modified polysiloxane has an equivalent weight of the at least one modified functional group in a range between 1000 g/mol and 12000 g/mol.

According to an embodiment of the present invention, based on the amount of the modified polysiloxane as 100 wt%, the amount of the dispersing agent is 20 wt% to 45 wt%.

According to the another aspect of the present invention, providing the method of forming a treatment agent for carbon fiber. The method includes performing a pre-mixing operation on a modified polysiloxane and a dispersing agent to obtain a premixed agent; and performing a dispersing operation on the premixed agent and water to obtain the treatment agent for carbon fiber, wherein a weight ratio between the water and the premixed agent is in a range from 5 to 99.

According to an embodiment of the present invention, the pre-mixing operation includes mixing at a stirring rate in a range from 500 rpm to 3000 rpm for 10 minutes to 60 minutes under a temperature of 20°C to 60°C.

According to an embodiment of the present invention, the dispersing operation includes adding the water under a temperature of 20°C to 60°C and a stirring rate of 500 rpm to 3000 rpm; and mixing the premixed agent and the water for 30 minutes to 120 minutes.

According to yet another aspect of the present invention, providing the treatment agent for carbon fiber formed by the above method. A particle size of the treatment agent for carbon fiber is smaller than 400 nm.

According to an embodiment of the present invention, the treatment agent for carbon fiber has a movement rate lower than 30%/hr.

According to yet another aspect of the present invention, providing the carbon fiber precursor covered by the above treatment agent for carbon fiber. The carbon fiber precursor is covered by the treatment agent for carbon fiber with 0.1 wt% to 5 wt%.

Application of the treatment agent composition for carbon fiber, the treatment agent for carbon fiber, the method of forming the same and the carbon fiber precursor, which uses the dispersing agent with a specific structure to disperse the modified polysiloxane in the water, thereby not having to use the organic solvent. Thus, pollution problem can be reduced, safety is increased, and emulsification stability and thermal stability of the treatment agent for carbon fiber can be improved.

### DETAILED DESCRIPTION

According to above, the present invention provides the treatment agent composition for carbon fiber, the treatment agent for carbon fiber, the method of forming the same and the carbon fiber precursor, which uses the dispersing agent with a specific structure to disperse the modified polysiloxane in the water, thereby not having to use the organic solvent. Thus, pollution problem can be reduced, safety is increased, and emulsification stability and thermal stability of the treatment agent for carbon fiber can be improved.

The treatment agent composition for carbon fiber includes a modified polysiloxane, a dispersing agent and water. The modified polysiloxane is modified by at least one modified functional group. In some embodiments, the modified functional group can be, for example, an amino group, an epoxy group and a carboxyl group, which can help improve properties of emulsion, such as water solubility and compatibility. In some embodiments, the modified polysiloxane has an equivalent weight of the functional group in a range between 1000 g/mol and 12000 g/mol. When the modified polysiloxane has the equivalent weight of the functional group in the aforementioned range, the modified polysiloxane has suitable reactivity to crosslink to form film.

The modified polysiloxane is a special silicone oil having properties of dimethyl silicone, which can be introduced various organic functional group, thereby having properties such as water solubility, compatibility, reactivity with different organic material, coatability and lubricity. In some examples, the modified polysiloxane can be KF-864, KF-865, KF-868, KF-859, KF-393, KF-860, KF-880, KF-8004, KF-8002, KF-8005, KF-867, KF-869, KF-861, KF-877, X-22-3820W and X-22-3939A produced by Shin Etsu Silicone; DMS-A11, DMS-A12, DMS-A15, DMS-A21, DMS-A31, DMS-A32, DMS-A35, DMS-A32R, DMS-A211, DMS-A214, AMS-A132, AMS-A152, AMS-A162, AMS-A163, AMS-A191, AMS-A1203, AMS-A233, AMS-A2202, AMS-42, ATM-1112, ATM-1322, UBS-0541 and UBS-0822 produced by Mitsubishi Chemical group; or DOWSIL series produced by Dow Corning, such as BY16-205, BY-16-849, FZ-3710, FZ-3760, FZ-3785, BY16-891 and FZ-3789.

In some embodiments, the modified polysiloxane has a viscosity in a range between 200 mm²/s and 10000 mm²/s, which depends on the dispersing agent. When the modified polysiloxane has the viscosity in the aforementioned range, it is prone to achieve emulsion with the dispersing agent, thereby dispersing in the water.

In some embodiments, based on an amount of the modified polysiloxane as 100 wt%, an amount of the dispersing agent is about 10 wt% to about 50 wt%, and about 20 wt% to about 45 wt% is preferable. If the amount of the dispersing agent is too less (for example, less than 10 wt%), the emulsion effect and emulsification stability of the modified polysiloxane would be affected; on the contrary, if the amount of the dispersing agent is too much (for example, more than 50 wt%), the efficacy of the treatment agent for carbon fiber would be affected, and the thermal stability of the treatment agent for carbon fiber would be decreased. Selection of the dispersing agent affects the emulsification stability and thermal stability. The dispersing agent has following structure shown as formula (I):

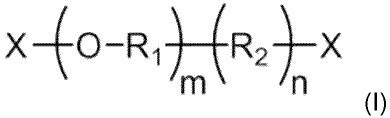

In the above formula (I), R₁ represents linear, cyclic or branched aliphatic hydrocarbon, ether or cyclic ether having 2 to 10 carbon atoms; R₂ represents substituted or unsubstituted linear, cyclic or branched aliphatic hydrocarbon, cyclic ether, cyclic hydrocarbon or aromatic hydrocarbon having 2 to 30 carbon atoms; each X independently represents alkyl group, hydroxyl group, sulfonyl hydroxide group, carboxyl group and or salt thereof, primary amine, secondary amine, tertiary amine or salt thereof, quaternary ammonium salt, alkyl dimethyl ammonium salt, alkyl trimethyl ammonium salt, dialkyl dimethyl ammonium salt, ester quaternary ammonium salt or imidazolinium quaternary ammonium salt; m represents integer from 1 to 10; and n represents integer from 1 to 30.

In some embodiments, the dispersing agent can be a cationic surfactant, a nonionic surfactant or combinations thereof. In some examples, the cationic surfactant includes primary amine, secondary amine, tertiary amine or salt thereof, quaternary ammonium salt, alkyl dimethyl ammonium salt, alkyl trimethyl ammonium salt, dialkyl dimethyl ammonium salt, ester quaternary ammonium salt or imidazolinium quaternary ammonium salt. For example, the cationic surfactant can be SINONATE SH50, SINONATE 962SF, or SINONATE 960SF produced by SINO-JAPAN CHEMICAL CO., LTD; or Disponil LDBS 19, Disponil LDBS 25, or Disponil LDBS 55 produced by BASF SE.

In some examples, the nonionic surfactant includes higher alcohol ethylene oxide additives, PEG/PPG copolymer, enol compound with long carbon chain, copolymer of polyethylene with long carbon chain and polypropylene glycol, polyoxyethylene styrenated aryl ether, polyoxyethylene octylphenyl ether, polyoxyethylene nonylphenyl ether, polyoxyethylene stearate, polyoxyethylene bisphenol A derivatives or combinations thereof. For example, the nonionic surfactant can be SINOPOL series produced by SINO-JAPAN CHEMICAL CO., LTD, such as SINOPOL1303, SINOPOL1305, SINOPOL1306, SINOPOL1307, SINOPOL1309, SINOPOL1310, SINOPOL1315, SINOPOL1802, SINOPOL1803, SINOPOL1805, SINOPOL1807, SINOPOL1815, SINOPOL1816, SINOPOL1820, SINOPOL1822, and SINOPOL18; or Lutensol AT11, Lutensol AT18, Lutensol AT25, Lutensol AT400 and Lutensol AT50 produced by BASF SE.

In some embodiments, the dispersing agent has a molecular weight in a range between about 150 g/mol and about 5000 g/mol, and about 150 g/mol and about 2000 g/mol is preferable. In some embodiments, the dispersing agent has an HLB value in a range between about 9.5 and about 14. The dispersing agent having the molecular weight and/or the HLB value in the aforementioned range can help increase dispersity of the modified polysiloxane.

In some embodiments, the treatment agent for carbon fiber can selectively include an auxiliary agent, which can include a pH modifier, such as methanoic acid, ethanoic acid, propanoic acid, lactic acid or citric acid. In some embodiments, based on the amount of the modified polysiloxane as 100 wt%, an amount of the auxiliary agent is 1 wt% to 3 wt%. The auxiliary agent is added with the amount in the aforementioned range can adjust pH value and degree of ionization of the treatment agent for carbon fiber, and further improve emulsification stability of the treatment agent for carbon fiber. In some embodiments, the pH value of the treatment agent for carbon fiber should be adjusted to about 6 to about 8.

The present invention further provides a method of forming a treatment agent for carbon fiber. The method includes performing a pre-mixing operation on the modified polysiloxane and the dispersing agent to obtain a premixed agent first. In some embodiments, the pre-mixing operation includes mixing the modified polysiloxane and the dispersing agent at a stirring rate in a range from about 500 rpm to about 3000 rpm for about 10 minutes to about 60 minutes under a temperature of about 20°C to about 60°C. The pre-mixing operation performed with the aforementioned condition helps the modified polysiloxane and the dispersing agent to be mixed homogenously.

Subsequently, the method includes performing a dispersing operation on the premixed agent and the water to obtain the treatment agent for carbon fiber. In some embodiments, a weight ratio of the water to the premixed agent is about 6 to about 9. In some embodiments, the dispersing operation includes adding the water under a temperature of about 20°C to about 60°C and a stirring rate of about 500 rpm to about 3000 rpm, and mixing for about 30 minutes to about 120 minutes. In the aforementioned embodiments, an adding rate of the water is about 0.1 mL/minute to about 10 mL/minute. The dispersing operation performed with the aforementioned condition helps the modified polysiloxane to be effectively dispersed in the water. In some embodiments, the auxiliary agent can be added during the pre-mixing operation and/or the dispersing operation.

The treatment agent for carbon fiber obtained by using the above treatment agent composition for carbon fiber and the method can have great emulsification stability. The emulsification stability can be evaluated according to a particle size and a moving rate. In some embodiments, the particle size of the treatment agent for carbon fiber is smaller than about 400 nm, and preferably smaller than about 150 nm. In some embodiments, the treatment agent for carbon fiber has a movement rate lower than about 30%/hr and preferably lower than about 29.5%/hr.

In some embodiments, an oiling step is performed on carbon fiber filament by using the treatment agent for carbon fiber under room temperature to obtain the carbon fiber precursor. Thus, the carbon fiber precursor is covered by the treatment agent for carbon fiber with about 0.1 wt% to about 5 wt%. The carbon fiber precursor can further be heated up, extruded, carbonized, acid rinsed, electrolyzed, water rinsed, dried, and etc., thereby obtaining the carbon fiber.

### Formation of the treatment agent for carbon fiber

### Embodiment 1

The pre-mixing operation was performed to mix amino group modified polysiloxane DAS-1 and the dispersing agent C3 with the stirring rate in a range from 500 rpm to 3000 rpm, thereby obtaining the premixed agent. Based on the amount of the amino group modified polysiloxane DAS-1 as 100 wt%, the amount of the dispersing agent C3 was 35 wt%. The amino group modified polysiloxane DAS-1 had an equivalent weight of the functional group of 2000, and the dispersing agent C3 was the cationic surfactant. Physical properties of the dispersing agent C3 was shown in detail in table 1, so it was not further discussed herein.

Subsequently, the premixed agent was kept at the stirring rate in a range from 500 rpm to 3000 rpm, and deionized water was dropped in with rate of 0.1 mL/minute to 10 mL/minute, thereby obtaining a water dispersed amino group modified polysiloxane, in which a weight of the deionized water is two to five times of a weight of the premixed agent. Then, the deionized water and the auxiliary agent was dropped in under the stirring rate in a range from 500 rpm to 3000 rpm, thereby obtaining the treatment agent for carbon fiber, in which a weight of the deionized water and the auxiliary agent was five to ninety nine times of the water dispersed amino group modified polysiloxane.

Then, the oiling step is performed on the carbon fiber filament by using the obtained treatment agent for carbon fiber to obtain the carbon fiber precursor.

### Embodiments 2 to 9 and Comparative examples 1 to 2

Embodiments 2 to 9 and Comparative examples 1 to 2 used the similar process as Embodiment 1 to form the treatment agent for carbon fiber. The differences were that Embodiments 2 to 9 and Comparative example 1 change the kind of the amino group modified polysiloxane and/or the dispersing agent, in which the dispersing agent A1 used in Comparative example 1 was disodium laureth sulphosuccinate (anionic surfactant). The amino group modified polysiloxane DAS-2 had an equivalent weight of the functional group of 6000. The dispersing agents used by Embodiments 2 to 9 and Comparative example 1 was shown in detail in table 1, in which the dispersing agents C1 to C3 were selected from a group composed of sulfonate, alkyl phenol ether sulfate, and sodium alkyl benzene sulfonate and combinations thereof, while the dispersing agents N1 to N3 were selected from a group composed of fatty alcohol polyoxyethylene ether, fatty alcohol polyethylene glycol ether and combinations thereof. Amounts of various components of Embodiments 2 to 9 and Comparative example 1 were shown in detail in table 2 and table 3, so it was not further discussed herein.

Comparative example 2 skipped using the treatment agent for carbon fiber in the oiling step, so Comparative example 2 only had evaluation result for the carbon fiber.

### Evaluation method

### Particle size of the treatment agent for carbon fiber

The particle size of the treatment agent for carbon fiber was measured by using particle size analyzer (Manufactured by Brookhaven Instruments, and product number was 90Plus/BI-MAS). The smaller particle size can be referred to better emulsification effect, so the emulsification stability would be better. The evaluation results of the particle size of Embodiments 1 to 9 and Comparative example 1 were shown in table 2 and table 3.

### Movement rate of the treatment agent for carbon fiber

Penetration change of the treatment agent for carbon fiber was measured by using stability analyzer (Manufactured by LUM, and product number was LUMiSizer 651) to calculate the movement rate of the emulsified particles of the treatment agent for carbon fiber, thereby evaluating the emulsification stability of the treatment agent for carbon fiber. The smaller movement rate can be referred to better emulsification stability, so storage time can be longer. The evaluation results of the movement rate of Embodiments 1 to 9 and Comparative example 1 were shown in table 2 and table 3.

### Thermal stability

Thermal weight loss at 275°C and 430°C for 30 minutes were measured on slurry layer formed by the treatment agent for carbon fiber by using thermogravimetric analyzer (TGA) (Manufactured by Waters Corporation, and product number is Q50) under nitrogen environment, in which based on the initial weight of the treatment agent for carbon fiber. When the thermal weight loss was smaller, the thermal stability of the treatment agent for carbon fiber was better. The evaluation results of the thermal stability of Embodiments 1 to 9 and Comparative example 1 were shown in table 2 and table 3.

### Oil content weight ratio

Extraction was performed on the carbon fiber precursor by Soxhlet extraction, in which a solvent was used to extract 10 g of the carbon fiber precursor for 4 hours. Subsequently, the solvent was vaporized, and thermal weight loss was measured by TGA. The evaluation results of the oil content weight ratio of Embodiments 1 to 9 and Comparative example 1 were shown in table 2 and table 3.

### Hairiness and filament breakage

The filament of 100 m was taken to visually examine number of occurrence of hairiness and filament breakage, and evaluate according to the following standard. The evaluation results of the hairiness and filament breakage of Embodiments 1 to 9 and Comparative examples 1 and 2 were shown in table 2 and table 3.
O : no hairiness and filament breakage
Δ : number of hairiness and filament breakage is in a range between 1 and 3
× : number of hairiness and filament breakage is greater than 4

**Table 1**

| type | symbol | viscosity (mPa.s @40 °C) | ion content (%) | hydroxide content (mg KOH/g) | HLB value | pH value |
|---|---|---|---|---|---|---|
| cationic | C1 | 300-500 | 50-70 | - | - | 6-8 |
| | C2 | 100-150 | 70-90 | - | - | 6-8 |
| | C3 | 80-120 | 50-70 | - | - | 5-7 |
| nonionic | N1 | 150-200 | - | 60-80 | 9-12 | 5-7 |
| | N3 | 100-120 | - | 240-250 | 10-13 | 5-7 |
| | N3 | 80-120 | - | 90-110 | 12-14 | 5-7 |
| anionic | A1 | 200-300 | 60-100 | - | - | 5-8 |

**Table 2**

| | type | Embodiment 1 | Embodiment 2 | Embodiment 3 | Embodiment 4 | Embodiment 5 | Embodiment 6 |
|---|---|---|---|---|---|---|---|
| modified polysiloxane | DAS-1 | 100 | 100 | 100 | 100 | 100 | - |
| | DAS-2 | - | - | - | - | - | 100 |
| dispersing agent | C1 | - | - | - | - | 10 | - |
| | C2 | - | - | - | 10 | - | 10 |
| | C3 | 35 | - | 10 | - | - | - |
| | N1 | - | - | - | - | - | - |
| | N2 | - | - | - | 25 | - | - |
| | N3 | - | 35 | 25 | - | 25 | 25 |
| | A1 | - | - | - | - | - | - |
| evaluation result | particle size (nm) | 55 | 80 | 25 | 120 | 331.5 | 354.1 |
| | movement rate (%/h) | 22.8 | 21.2 | 19.5 | 22.4 | 29.5 | 24.5 |
| | thermal stability (wt%) | 87.2 | 91.5 | 89.2 | 90.5 | 91.2 | 92.2 |
| | oil content weight ratio (wt%) | 1.1 | 1 | 1.2 | 1.1 | 1.2 | 0.8 |
| | hairiness and filament breakage | ○ | ○ | ○ | ○ | ○ | △ |

**Table 3**

| | type | Embodiment 7 | Embodiment 8 | Embodiment 9 | Comparative example 1 | Comparative example 2 |
|---|---|---|---|---|---|---|
| modified polysiloxane | DAS-1 | - | - | 50 | 100 | - |
| | DAS-2 | 100 | 100 | 50 | - | - |
| dispersing agent | C1 | 10 | - | - | - | - |
| | C2 | - | - | - | - | - |
| | C3 | - | 10 | 10 | - | - |
| | N1 | 25 | - | - | - | - |
| | N2 | - | - | - | - | - |
| | N3 | - | 25 | 25 | - | - |
| | A1 | - | - | - | 35 | - |
| evaluation result | particle size (nm) | 99.6 | 151.3 | 229.1 | 526.3 | - |
| | movement rate (%/h) | 18.5 | 22.1 | 27.8 | 50.3 | - |
| | thermal stability (wt%) | 91.5 | 91 | 92.2 | 85.2 | - |
| | oil content weight ratio (wt%) | 1.3 | 1.1 | 1.1 | 1.1 | - |
| | hairiness and filament breakage | ○ | ○ | ○ | × | × |

According to above embodiments, Embodiments 1 to 9 used the specific content of the cationic surfactant and/or nonionic surfactant with the structure of formula (I) and the amino group modified polysiloxane to form the treatment agent for carbon fiber, which indeed have better emulsification stability and thermal stability. Moreover, the carbon fiber precursor with the cover of the treatment agent for carbon fiber of Embodiments 1 to 9 can decrease the hairiness and filament breakage during high-temperature treatment.

On the contrary, comparative example 1 used the anionic surfactant, so the treatment agent for carbon fiber obtained had greater particle size and faster movement rate, which represented that it had bad emulsification effect and bad emulsification stability. Moreover, the treatment agent for carbon fiber of comparative example 1 had greater thermal weight loss, which means it had bad thermal stability. In addition, no matter comparative example using the anionic surfactant or comparative example 2 without using the treatment agent for carbon fiber, both obtained the carbon fiber with obviously more hairiness and filament breakage.

Therefore, the present invention provides the treatment agent composition for carbon fiber, the treatment agent for carbon fiber, the method of forming the same and the carbon fiber precursor, which uses the dispersing agent with the specific structure to disperse the modified polysiloxane in the water, thereby not having to use the organic solvent. Thus, pollution problem can be reduced, safety is increased, and emulsification stability and thermal stability of the treatment agent for carbon fiber can be improved.

## Claims

1. A treatment agent composition for carbon fiber, comprising:
a modified polysiloxane, having at least one modified functional group;
a dispersing agent, wherein based on an amount of the modified polysiloxane as 100 wt%, an amount of the dispersing agent is 10 wt% to 50 wt%, and the dispersing agent has a structure shown as following formula (I): 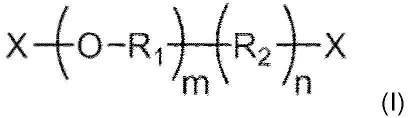
in the formula (I), R₁ represents linear, cyclic or branched aliphatic hydrocarbon, ether or cyclic ether having 2 to 10 carbon atoms; R₂ represents substituted or unsubstituted linear, cyclic or branched aliphatic hydrocarbon, cyclic ether, cyclic hydrocarbon or aromatic hydrocarbon having 2 to 30 carbon atoms; each X independently represents alkyl group, hydroxyl group, sulfonyl hydroxide group, carboxyl group and or salt thereof, primary amine, secondary amine, tertiary amine or salt thereof, quaternary ammonium salt, alkyl dimethyl ammonium salt, alkyl trimethyl ammonium salt, dialkyl dimethyl ammonium salt, ester quaternary ammonium salt or imidazolinium quaternary ammonium salt; m represents integer from 1 to 10; and n represents integer from 1 to 30; and water.

2. The treatment agent composition for carbon fiber of claim 1, further comprising:
an auxiliary agent, including a pH modifier, wherein based on the amount of the modified polysiloxane as 100 wt%, an amount of the auxiliary agent is 1 wt% to 3 wt%.

3. The treatment agent composition for carbon fiber of claim 2, wherein the pH value of the treatment agent composition for carbon fiber is 6 to 8.

4. The treatment agent composition for carbon fiber of any one of claims 1-3, wherein the modified polysiloxane has a viscosity in a range between 200 mm²/s and 10000 mm²/s.

5. The treatment agent composition for carbon fiber of any one of claims 1-4, wherein the dispersing agent includes a cationic surfactant, a nonionic surfactant or combinations thereof.

6. The treatment agent composition for carbon fiber of any one of claims 1-5, wherein the dispersing agent has a molecular weight in a range between 150 g/mol and 5000 g/mol.

7. The treatment agent composition for carbon fiber of any one of claims 1-6, wherein the dispersing agent has an HLB value in a range between 9.5 and 14.

8. The treatment agent composition for carbon fiber of any one of claims 1-7, wherein the modified polysiloxane has an equivalent weight of the at least one modified functional group in a range between 1000 g/mol and 12000 g/mol.

9. The treatment agent composition for carbon fiber of any one of claims 1-8, wherein based on the amount of the modified polysiloxane as 100 wt%, the amount of the dispersing agent is 20 wt% to 45 wt%.

10. A method of forming a treatment agent for carbon fiber, comprising:
performing a pre-mixing operation on a modified polysiloxane and a dispersing agent to obtain a premixed agent; and
performing a dispersing operation on the premixed agent and water to obtain the treatment agent for carbon fiber, wherein a weight ratio between the water and the premixed agent is in a range from 5 to 99.

11. The method of claim 10, wherein the pre-mixing operation comprises mixing at a stirring rate in a range from 500 rpm to 3000 rpm for 10 minutes to 60 minutes under a temperature of 20°C to 60°C.

12. The method of any one of claims 10-11, wherein the dispersing operation comprises:
adding the water under a temperature of 20°C to 60°C and a stirring rate of 500 rpm to 3000 rpm; and
mixing the premixed agent and the water for 30 minutes to 120 minutes.

13. A treatment agent for carbon fiber formed by the method of any one of claims 10-12, wherein a particle size of the treatment agent for carbon fiber is smaller than 400 nm.

14. The treatment agent for carbon fiber of claim 13, wherein the treatment agent for carbon fiber has a movement rate lower than 30%/hr.

15. A carbon fiber precursor, covered by the treatment agent for carbon fiber of any one of claims 13-14, wherein the carbon fiber precursor is covered by the treatment agent for carbon fiber with 0.1 wt% to 5 wt%.
